# EUROPEAN PATENT SPECIFICATION

(11) **EP 3 763 921 B1**
(45) Date of publication and mention of the grant of the patent: **19.04.2023**
(21) Application number: 20180851.6
(22) Date of filing: 18.06.2020
(51) Int. Cl.: F01M 13/00, F01M 13/04, B01D 35/147, F16K 15/14

(54) **CRANKCASE VENTILATION VALVE, CRANKCASE VENTILATION FILTER AND CRANKCASE**
KURBELGEHÄUSEENTLÜFTUNGSVENTIL, KURBELGEHÄUSEENTLÜFTUNG UND KURBELGEHÄUSE
SOUPAPE DE VENTILATION DE CARTER, FILTRE DE VENTILATION DE CARTER ET CARTER

(30) Priority: 09.07.2019 EP 19185326
(43) Date of publication of application: 13.01.2021
(73) Proprietor: MANN+HUMMEL GmbH, 71636 Ludwigsburg (DE)
(72) Inventor: VENKATESH NAYAK, Hemanth Kumar, 571124 Mysore (IN); SAVADATTI, Pramod, 580001 Dharwad (IN); SAVANUR RAGHAVENDRA RAO, Srikanth, 560085 Bangalore (IN); PRAHLAD, Praveen, 560060 Bangalore (IN); MELDE, Markus, 67346 Speyer (DE)
(74) Representative: Mann + Hummel Intellectual Property

(56) References cited:
- DE-A1-102008 030 203
- DE-U1-202004 013 123
- DE-U1-202005 012 403
- DE-U1-202005 012 403
- US-A- 5 697 349
- US-A1- 2002 000 249

## Description

### Technical Area

The invention relates to a crankcase ventilation valve comprising a valve element mounted on a ventilation aperture in the crankcase. The invention also relates to a crankcase with a crankcase ventilation valve.

### Prior Art

US 2002/0000249 A1 discloses a crankcase ventilation valve for the crankcase of an internal combustion engine including a valve seat, a closure plate cooperating with the valve seat, a conical spring whose front face with larger diameter is acting upon the closure plate, and a cover to be fixed to the crankcase and supporting the opposite end of the conical spring.

DE 10 2013 005 624 A1 discloses a crankcase ventilation valve comprising a membrane which is provided with a slot which allows a reduction of pressure differences.

It is an object of the invention to provide a crankcase ventilation valve which is designed in a simple and reliable way.

### Disclosure of the Invention

According to the invention, a crankcase ventilation valve is provided which includes a valve element to be placed on a ventilation aperture in the crankcase, in a crankcase ventilation valve housing or in a housing of a crankcase ventilation filter. The crankcase ventilation valve also includes a conical spring whose front face with larger diameter acts on the valve element. The crankcase ventilation valve also includes a cover to be fixed to the crankcase, the crankcase ventilation valve housing or the housing of a crankcase ventilation filter, the cover supporting the opposite end of the conical spring. The conical spring acts with its larger diameter on the valve element at its front end and with its smaller diameter on the cover at the opposite end.

According to the invention, the valve element is designed as a membrane or membrane element that carries a support washer. The support washer is made of metal and supports the conical spring.

The advantage of this design is that the metal support washer enables uniform force transmission of the spring force. The spring force of the conical spring is evenly transmitted to the membrane element via the support washer. Asymmetrical force transmission on the membrane element is avoided. The washer may also be made of sheet materials that have mechanical properties similar to sheet metal and thus are also suitable to support the spring, for example fiber reinforced plastics.

Another advantage of this design is that the membrane element, which forms the valve element, is flexible and can deform under pressure. The conical spring presses the membrane element into the sealing position on the ventilation aperture. If the gas pressure exceeds the spring force of the conical spring, the membrane element lifts off from the ventilation aperture so that a pressure equalization can take place. During lifting, the membrane element is either deformed so that the ventilation aperture is released. Or the membrane element as a whole lifts off from the ventilation aperture and is displaced against the force of the conical spring.

It is another advantage that the metal support washer is integrated into the membrane element. The support washer is supported by the membrane element, so that no additional fastening measures for the support washer are necessary.

It is another advantage that the spring element is designed as a conical spring. Compared to a coil spring, the conical spring has a higher stability in lateral direction. The danger of the conical spring deforming laterally is reduced.

The end face of the conical spring with a larger diameter is in contact with the metal support washer. When the conical spring is compressed, at least the second spring coil comes into contact with the support washer in addition to the first spring coil. As a result, the spring force is induced over a larger area on the support washer. The force is introduced into the support washer in a uniform manner so that the risk of the support washer tilting is reduced.

In an advantageous embodiment, the supporting washer is encapsulated by the material of the membrane element. This has the advantage that a combination of support washer and membrane element is already achieved during manufacture and the support washer is firmly held in the membrane element. It is not necessary to retrofit the support washer.

The material of the membrane element is preferably injection moulded around the support washer.

In another preferred embodiment, the radial outside of the support washer is enclosed by the material of the membrane element. This ensures an even reception of the supporting disc in the membrane element and even force transmission from the supporting disc into the membrane element.

According to another preferred embodiment, the cover on which the conical spring is supported has a guide element for guiding and centering the conical spring. This is advantageous as the position of the conical spring is fixed at the cover and the position of the longitudinal axis of the conical spring will be maintained when compressed. This reduces the risk of the conical spring tilting.

The guide element on the cover is designed as a cylinder, in particular as a hollow cylinder. The conical spring is mounted on the cylindrical guide element so that the guide element projects into the conical spring.

The cover is preferably designed as a plastic component.

According to another preferred embodiment, the membrane element consists of a rubber material, for example a natural rubber material like caoutchouc. The support washer is made of a metal such as sheet metal.

According to another preferred embodiment, the conical spring has a minimum conicity. For example, it may be advantageous that the ratio of the maximum diameter at one end of the conical spring to the minimum diameter at the opposite end of the conical spring is at least 1.5. This ensures that when the conical spring is compressed, successive conical turns lie radially within the adjacent conical turn.

In another preferred embodiment, the support washer is axially completely integrated into the membrane element. The support washer therefore does not protrude axially beyond the side surface of the membrane element. The axial thickness is determined by the membrane element.

The invention also refers to a crankcase with a crankcase ventilation valve as described above, which is arranged on the crankcase. The membrane element of the crankcase ventilation valve sits on the ventilation aperture in the crankcase and closes the ventilation aperture as long as the pressure is less than the force of the conical spring. The cover is also fastened to the crankcase so that the force of the conical spring is transmitted through the cover into the crankcase.

The invention also refers to a crankcase ventilation filter with a crankcase ventilation valve as described above, which is arranged on a ventilation aperture of the crankcase ventilation filter. The membrane element of the crankcase ventilation valve sits on the ventilation aperture and closes the ventilation aperture as long as the pressure is less than the force of the conical spring. The cover is also fastened to the crankcase so that the force of the conical spring is transmitted through the cover into the crankcase.

### Short Description of the Drawings

A description will now be given as a non-limiting example of a form of embodiment of a plug-in-connection according to the present invention. Reference will be made to the attached drawings, in which:
- Fig. 1: is a prospective view of a crankcase including a crankcase ventilation valve according to the invention in an exploded view,
- Fig. 2 is: a flight view of the crankcase including the crankcase ventilation valve,
- Fig. 3: is an enlarged sectional view of the crankcase ventilation valve,
- Fig. 4: is a prospective view of the outside of a cover of the valve,
- Fig. 5: is a prospective view of the inside of a cover,

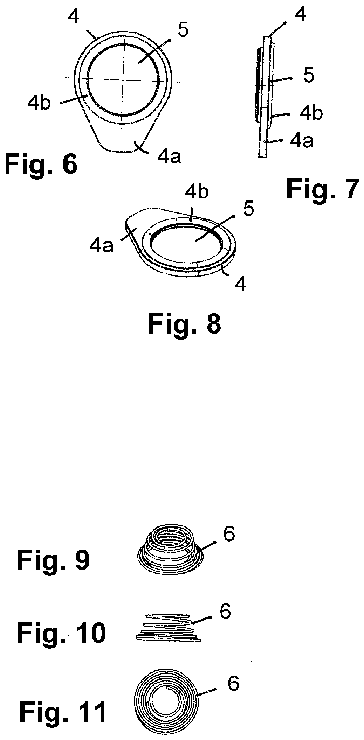

- Fig. 6: is a plan view of a membrane element of the valve,
- Fig. 7: is a side view of the valve,
- Fig. 8: is a prospective view of the valve,
- Fig. 9: is a prospective view of a conical spring of the valve,
- Fig. 10: is a side view of the conical spring,
- Fig. 11: is a plan view of the conical spring.

In the figures, same components are provided with the same reference characters.

### Embodiments of the Invention

On the housing 1 of a crankcase ventilation filter a crankcase ventilation valve 2 is arranged, which is placed on a ventilation aperture 3 in the side area of the housing 1. The crankcase ventilation valve 2 comprises a membrane element 4 with an integrated support washer 5, a conical spring 6 and a cover 7. The membrane element 4 is placed on the ventilation aperture 3 in the housing 1. A spring force exerted by the conical spring 6 acts on the membrane element 4, pressing it in a closing position on the ventilation aperture 3. The end face of the conical spring 6 with its larger diameter is supported by the support washer 5 in the membrane element 4. The opposite face of the conical spring 6 is supported on the inside of the cover 7.

Membrane element 4 consists of a rubber material such as HNBR. The support washer 5 is made of metal, in particular sheet metal.

The ventilation aperture 3 is located in a receptacle 8 of the housing 1 in which the membrane element 4 is inserted. The receptacle 8 also serves to receive and fasten the cover 7. The spring force of the conical spring 6 presses the membrane element 4 into the seat in the receptacle 8 via the support washer 5 and thereby closes the ventilation aperture 3. At the opposite end, the conical spring 6 is supported in the cover 7. The spring force is conducted via the cover 7 into the receptacle 8 on the housing 1.

The metal support washer 5 is round and has a circumferential, axially projecting edge. The support plate 5 is completely accommodated in the membrane element 4. The radial outside of the support washer 5 is completely surrounded by the material of the membrane element 4. In the axial direction, the support plate 5 does not project beyond the membrane element 4.

The membrane element 4 has a semicircular outer contour and a section 4a which is radially widened. The ventilation aperture 3 is round, the mounting 8 has a contour which corresponds to the contour of the membrane element 4. The cover 7 has a corresponding contour, too.

The membrane element 4 and the support washer 5 form a combined component. The support washer 5 is overmoulded by the material of the membrane element 4 which is preferably done by injection moulding.

The conical spring 6 has a conicity that the ratio of the maximum diameter at one end of the conical spring 6 to the minimum diameter at the opposite end of the conical spring 6 is at least 1.5. The conicity of the conical spring 6 is such that when the conical spring 6 is compressed, adjacent spring coils lie radially in each other.

The combination of conical spring 6 and support washer 5 made of metal and integrated in membrane element 4 has the advantage that tilting of conical spring 6 and membrane element 4 can be avoided. The spring force of the conical spring 6 is distributed over a relatively large area on the support washer 5. Punctual forces on the support washer 5 can be avoided.

On the inside of the cover 7 there is a guide element 9, which is designed as a hollow cylinder. The guide element 9 may have a low conicity. The guide element 9 serves to accommodate the cone spring 6 at its end with minimum diameter. The conical spring 6 is guided and centred on the guide element 9, which further reduces the risk of tilting of the conical spring 6. The guide element 9 projects into the conical spring 6.

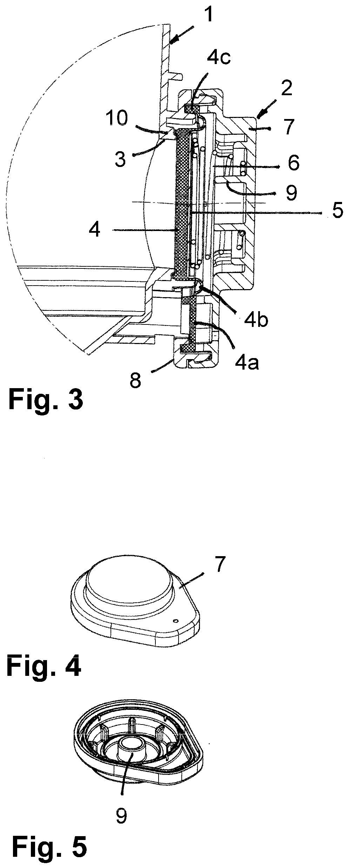

The membrane element 4 has an axially projecting ring 4b on its side facing the conical spring 6, which surrounds the support washer 5. On its radial outer side, the ring 4b expands to form a circumferential fastening section 4c (Fig. 3), which is accommodated in a recess in the receptacle 8 and fixed by the cover 7 for connecting firmly the outer edge of the membrane element 4 to the housing 1.

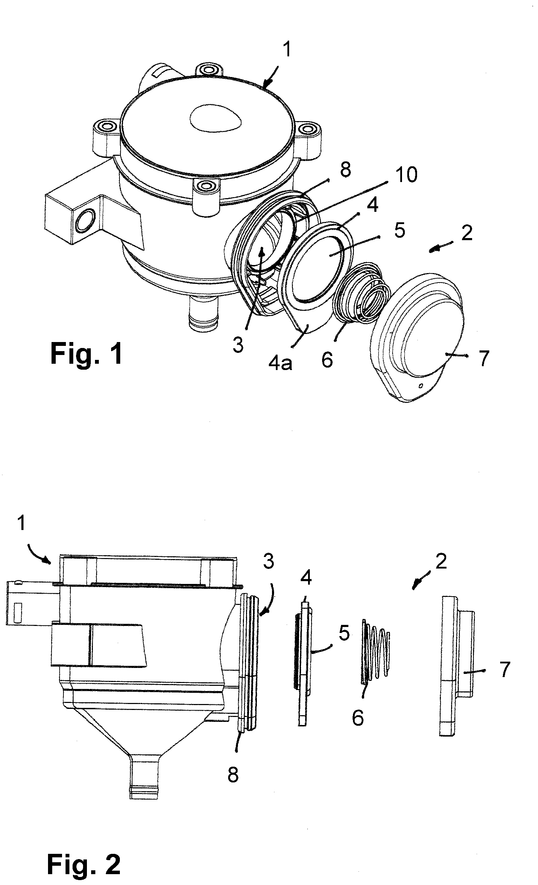

The support washer 5 has a diameter which is larger than the diameter of the ventilation aperture 3. The membrane element 4 is supported by a side edge 10 (Fig. 1, 3), and the support washer 5 is also supported by side edge 10. The spring forces exerted by the conical spring 6 are thus transmitted from the support washer 5 via the membrane element 4 to the side edge 10 of the receptacle 8.

With respect to Figures 1 - 3, the crankcase ventilation valve 2 is described in an embodiment in which it is placed on a ventilation aperture in a housing 1 of a crankcase ventilation filter, which is configured for being connected to a ventilation line of a crankcase. However, as described and understood by the skilled person, the valve according to the invention can also be used attached to a crankcase or to a separate housing for the crankcase ventilation valve.

## Claims

1. Crankcase ventilation valve, comprising a valve element (4) to be placed on a ventilation aperture (3) in the crankcase, in a crankcase ventilation valve housing or in a housing (1) of a crankcase ventilation filter, a conical spring (6) whose front face with larger diameter is acting upon the valve element (4), pressing it in a closing position on the ventilation aperture (3), and a cover (7) to be fixed to the crankcase, the crankcase ventilation valve housing or the housing (1) of the crankcase ventilation filter and supporting the opposite end of the conical spring (6), **characterized in that** the valve element (4) is designed as a membrane element (4) which carries a support washer (5), wherein the support washer (5) is made of metal and supports the conical spring.

2. Crankcase ventilation valve according to claim 1, **characterized in that** the support washer (5) is overmoulded by the material of the membrane element (4).

3. Crankcase ventilation valve according to claim 1 or 2, **characterized in that** the material of the membrane element (4) is injection-moulded around the support washer (5).

4. Crankcase ventilation valve according to claim 1 to 3, **characterized in that** the radial outside of the support washer (5) is surrounded by the material of the membrane element (4).

5. Crankcase ventilation valve according to claim 1 to 4, **characterized in that** the support washer (5) is axially completely integrated into the membrane element (4).

6. Crankcase ventilation valve according to claim 1 to 5, **characterized in that** one side of the cover (7) facing the conical spring (6) has a guide element (9) for guiding and centering the conical spring (6).

7. Crankcase ventilation valve according to claim 6, **characterized in that** the guide element (9) is designed as a cylinder or cone.

8. Crankcase ventilation valve according to claim 1 to 7, **characterized in that** the membrane element (4) is made of a rubber material.

9. Crankcase ventilation valve according to claim 1 to 8, **characterized in that** the ratio of the maximum diameter on one end of the conical spring (6) to the minimum diameter on the opposite end of the conical spring (6) is at least 1.5.

10. Crankcase ventilation valve according to claim 1 to 9, **characterized in that** the support washer (5) is made of sheet metal.

11. Crankcase ventilation filter comprising a housing (1) and a crankcase ventilation valve according to any of claims 1-10.

12. Crankcase comprising a crankcase ventilation valve (2) according to claim 1 to 10 or a crankcase ventilation filter according to claim 11.

## Patentansprüche

1. Kurbelgehäuseentlüftungsventil, umfassend einen auf einer Entlüftungsöffnung (3) im Kurbelgehäuse, in einer Kurbelgehäuseentlüftungsventilkammer oder in einem Gehäuse (1) eines Kurbelgehäuseentlüftungsfilters zu platzierenden Ventilelement (4), einer Kegelfeder (6), deren Stirnseite mit größerem Durchmesser auf das Ventilelement (4) einwirkt und es in eine Schließstellung auf die Entlüftungsöffnung (3) drückt, und einen am Kurbelgehäuse, an der Kurbelgehäuseentlüftungsventilkammer oder am Gehäuse (1) des Kurbelgehäuseentlüftungsfilters zu befestigenden Deckel (7), der das gegenüberliegende Ende der Kegelfeder (6) abstützt, **dadurch gekennzeichnet, dass** das Ventilelement (4) als Membranelement (4) ausgebildet ist, das eine Unterlegscheibe (5) trägt, wobei die Unterlegscheibe (5) aus Metall besteht und die Kegelfeder abstützt.

2. Kurbelgehäuseentlüftungsventil nach Anspruch 1, **dadurch gekennzeichnet, dass** die Unterlegscheibe (5) mit dem Material des Membranelementes (4) umspritzt ist.

3. Kurbelgehäuseentlüftungsventil nach Anspruch 1 oder 2, **dadurch gekennzeichnet, dass** das Material des Membranelementes (4) um die Unterlegscheibe (5) herum angespritzt ist.

4. Kurbelgehäuseentlüftungsventil nach Anspruch 1 bis 3, **dadurch gekennzeichnet, dass** die radiale Außenseite der Unterlegscheibe (5) von dem Material des Membranelementes (4) umgeben ist.

5. Kurbelgehäuseentlüftungsventil nach Anspruch 1 bis 4, **dadurch gekennzeichnet, dass** die Unterlegscheibe (5) axial vollständig in das Membranelement (4) integriert ist.

6. Kurbelgehäuseentlüftungsventil nach Anspruch 1 bis 5, **dadurch gekennzeichnet, dass** eine der Kegelfeder (6) zugewandten Seite des Deckels (7) ein Führungselement (9) zum Führen und Zentrieren der Kegelfeder (6) hat.

7. Kurbelgehäuseentlüftungsventil nach Anspruch 6, **dadurch gekennzeichnet, dass** das Führungselement (9) als Zylinder oder Konus ausgebildet ist.

8. Kurbelgehäuseentlüftungsventil nach Anspruch 1 bis 7, **dadurch gekennzeichnet, dass** das Membranelement (4) aus einem Gummimaterial besteht.

9. Kurbelgehäuseentlüftungsventil nach Anspruch 1 bis 8, **dadurch gekennzeichnet, dass** das Verhältnis des größten Durchmessers an einem Ende der Kegelfeder (6) zum kleinsten Durchmesser am gegenüberliegenden Ende der Kegelfeder (6) mindestens 1,5 beträgt.

10. Kurbelgehäuseentlüftungsventil nach Anspruch 1 bis 9, **dadurch gekennzeichnet, dass** die Unterlegscheibe (5) aus Metallblech hergestellt ist.

11. Kurbelgehäuseentlüftungsfilter umfassend ein Gehäuse (1) und ein Kurbelgehäuseentlüftungsventil nach einem der obigen Ansprüche 1 bis 10.

12. Kurbelgehäuse umfassend ein Kurbelgehäuseentlüftungsventil (2) nach Anspruch 1 bis 10 oder einen Kurbelgehäuseentlüftungsfilter nach Anspruch 11.

## Revendications

1. Soupape d'évacuation de carter de vilebrequin, comprenant un élément de soupape (4) destiné à être placé sur une orifice d'évacuation (3) dans le carter de vilebrequin, dans un boîtier d'évacuation de carter de vilebrequin ou dans un boîtier (1) d'un filtre d'évacuation de carter de vilebrequin, un ressort conique (6) dont la face avant avec un plus grand diamètre agit sur l'élément de soupape (4) le pressant dans une position de fermeture sur l'orifice d'évacuation (3), et un couvercle (7) destiné à être fixé au carter de vilebrequin, au boîtier d'évacuation de carter de vilebrequin ou au boîtier (1) du filtre d'évacuation de carter de vilebrequin et supportant l'extrémité opposée du ressort conique (6), **caractérisée en ce que** l'élément de soupape (4) est conçu en tant qu'élément de membrane (4) qui comporte une rondelle de support (5), la rondelle de support (5) étant constituée de métal et supportant le ressort conique.

2. Soupape d'évacuation de carter de vilebrequin selon la revendication 1, **caractérisée en ce que** la rondelle de support (5) est surmoulée par le matériau de l'élément de membrane (4).

3. Soupape d'évacuation de carter de vilebrequin selon la revendication 1 ou 2, **caractérisée en ce que** le matériau de l'élément de membrane (4) est moulé par injection autour de la rondelle de support (5).

4. Soupape d'évacuation de carter de vilebrequin ebrequin selon la revendication 1 à 3, **caractérisée en ce que** le côté extérieur radial de la rondelle de support (5) est entouré par le matériau de l'élément de membrane (4).

5. Soupape d'évacuation de carter de vilebrequin selon la revendication 1 à 4, **caractérisée en ce que** la rondelle de support (5) est complètement intégrée de manière axiale dans l'élément de membrane (4).

6. Soupape d'évacuation de carter de vilebrequin selon la revendication 1 à 5, **caractérisée en ce qu'**un côté du couvercle (7) faisant face au ressort conique (6) a un élément de guidage (9) pour guider et centrer le ressort conique (6).

7. Soupape d'évacuation de carter de vilebrequin selon la revendication 6, **caractérisée en ce que** l'élément de guidage (9) est conçu en tant que cylindre ou cône.

8. Soupape d'évacuation de carter de vilebrequin selon la revendication 1 à 7, **caractérisée en ce que** l'élément de membrane (4) est constitué d'un matériau de caoutchouc.

9. Soupape d'évacuation de carter de vilebrequin selon la revendication 1 à 8, **caractérisée en ce que** le rapport entre le diamètre maximal sur une extrémité du ressort conique (6) et le diamètre minimal sur l'extrémité opposée du ressort conique (6) est d'au moins 1,5.

10. Soupape d'évacuation de carter de vilebrequin selon la revendication 1 à 9, **caractérisée en ce que** la rondelle de support (5) est constituée de tôle métallique.

11. Filtre d'évacuation de carter de vilebrequin comprenant un boîtier (1) et une soupape d'évacuation de carter de vilebrequin selon l'une quelconque des revendications 1 à 10.

12. Carter de vilebrequin comprenant une soupape d'évacuation de carter de vilebrequin (2) selon la revendication 1 à 10 ou un filtre d'évacuation de carter de vilebrequin selon la revendication 11.
